# EUROPÄISCHE PATENTANMELDUNG

(11) **EP 4 800 458 A1**
(43) Veröffentlichungstag der Anmeldung: **02.09.2026**
(21) Anmeldenummer: 25160746.1
(22) Anmeldetag: 27.02.2025
(51) Int. Cl.: G02B 27/34, F41G 1/34, G02B 25/02

(54) **PERMANENT SELBSTLEUCHTENDER VISIERKÖRPER**

(71) Anmelder: smolsys AG, 6039 Root D4 (CH)
(72) Erfinder: BURKHALTER, Patrick, 3412 Heimiswil (CH)
(74) Vertreter: Zwick, Evelyn

(57) **Zusammenfassung**

Die Erfindung betrifft einen permanent selbstleuchtenden Visierkörper (10) zur Kennzeichnung wichtiger Punkte bei Helligkeit, schlechten Lichtverhältnissen sowie bei Dunkelheit. Er umfasst ein zylindrisches Gehäuse (20) mit einer Achse 11, eine normal zu dieser angeordneten, transparenten Stirnwand (21) als Betrachtungsfläche, eine ihr entgegengesetzt angeordnete Rückwand (22) und einen Mantel (23), welche gemeinsam einen gasdicht verschlossenen Innenraum (24) bilden. Im Innenraum (24) ist eine als selbstleuchtende Tritiumgaslichtquelle (GTLS) ausgestaltete, zylindrische Glaskapsel (30) koaxial zur Achse (11) eingebracht, welche eine Glasmantelfläche (33) und eine der Stirnwand (21) zugewandten Frontfläche (31) umfasst. Erfindungsgemäss ist zwischen der Glasmantelfläche (33) und der dem Mantel (23) eine Pigmentschicht (40) angeordnet, die mit nachleuchtenden Pigmenten (45) versetzt ist und eine der Stirnwand (21) zugewandten Stirnfläche (41) aufweist. Zwischen der Frontfläche (31) und der Stirnwand (21) ist keine Schicht mit nachleuchtenden Pigmenten angeordnet, sodass ein Betrachter, der axial auf die Stirnwand (21) schaut, freie Sicht durch die Stirnwand (21) auf die Frontfläche (31) der Glaskapsel (30) und die Stirnfläche (41) der Pigmentschicht (40) hat.

## Beschreibung

Die Erfindung betrifft einen permanent selbstleuchtenden Visierkörper zur Kennzeichnung wichtiger Punkte bei Helligkeit, schlechten Lichtverhältnissen sowie bei Dunkelheit, insbesondere zum Einbau in Instrumente zum Anvisieren.

### Technisches Gebiet

Selbstleuchtende oder nachleuchtende Körper werden vor allem in Uhren, auf Lünetten oder in anderen Instrumenten benötigt, beispielsweise im Cockpit von Flugzeugen, um die wichtigen Stellen an Zeigern und Beschriftungen der Instrumente hervorzuheben. So ist es dem Betrachter auch bei wenig Licht oder im Dunkeln möglich, die Einstellung der Instrumente zu lesen. Andere Anwendungsbeispiele sind Visierhilfen bei Waffen, bekannt als Kimme und Korn. Solche selbstleuchtende Vorrichtungen haben keinen Zugriff auf eine Stromversorgung und sind oft sehr klein.

Bekannt sind insbesondere selbstleuchtende Tritiumgaslichtquellen, auch nach dem Englischen Begriff Gaseous Tritium Light Sources oder kurz GLTS genannt. Dies sind geschlossene Glaskapseln, welche inwändig mit einem Phosphor beschichtet und mit dem leicht radioaktiven Tritiumgas gefüllt sind. Als Phosphore werden umgangssprachlich Stoffe bezeichnet, die durch Bestrahlung zum Leuchten angeregt werden können. Dieser Effekt wird Fluoreszenz genannt und leuchtet nicht bzw. nur sehr kurz nach, etwa einige Millisekunden. Beispiele solcher Substanzen sind CRT Phosphors, darunter fallen Zinksulfid und Zinkoxyd, die bei radioaktiver Bestrahlung leuchten.

Solche radio-lumineszierende Kapseln leuchten, dank der langen Halbwertszeit des Tritiumgases, jahrzehntelang und haben sich sehr bewährt. Da ihre permanente Leuchtkraft allerdings eher schwach ist, sind sie bei Helligkeit, wo sie weiss wirken, wenig auffallend. In der Dämmerung oder bei Dunkelheit werden sie vom menschlichen Auge erst nach einer Weile wahrgenommen, wenn sich das Auge an die Dunkelheit gewöhnt hat.

Als Alternativen von Lumineszenz, der Sammelbegriff für Leuchterscheinungen, sind nachleuchtende, sogenannte phosphoreszierende Farben bekannt, wie sie oft auf Zeigern und Punkten von Uhren und auf Lünetten zu finden sind. Diese teilweise lange und stark nachleuchtenden Farben sind schwierig zum Auftragen und müssen gut vor Umwelteinflüssen geschützt werden, insbesondere vor Feuchtigkeit. Sie beziehen ihre Energie aus dem Licht, beispielsweise Tageslicht, dem sie lange ausgesetzt sein müssen, um die Energie zu speichern.

Aus der WO 2028/137918 ist ein GTLS bekannt, das mit nachleuchtenden Pigmenten kombiniert wird. Eine Schicht von nachleuchtenden Pigmenten wird zwischen die Betrachtungsfläche und ein GTLS angeordnet, damit der Betrachter, der bei Dämmerung durch diese Fläche schaut, erst vorwiegend die hell nachleuchtenden Pigmente sehen kann und sich mit der Zeit, während sich das Auge langsam an die Dunkelheit gewöhnt hat, das GTLS stärker sieht, während die Leuchtkraft der nachleuchtenden Pigmente langsam nachlassen. Insbesondere im Cockpit werden diese Lösungen sehr geschätzt, wo das schnelle Auffinden des Punktes wichtig ist, beispielsweise bei plötzlichem Stromausfall.

Beim Anvisieren von Gegenständen werden beispielsweise Kimme und Korn verwendet. Das Korn ist der nahe der Laufmündung befindliche Teil der Visiereinrichtung. Auch in diesen können selbstleuchtende oder nachleuchtende Orientierungspunkte verwendet werden. Es hat sich gezeigt, dass die oben genannte Kombination von selbst- und nachleuchtenden Orientierungspunkten nicht für alle Anwendungen zufriedenstellende Ergebnisse liefert. Bei manchen Sichtverhältnissen scheint der Punkt zu grell und damit unscharf und zu wenig definiert.

### Darstellung der Erfindung

Es ist die Aufgabe der vorliegenden Erfindung, einen eingangs erwähnten permanent selbstleuchtenden Visierkörper zu beschreiben, der auch bei geringen Lichtverhältnissen als definierter Punkt und nicht als diffus ausstrahlender Punkt wahrgenommen wird. Dabei ist nicht die Helligkeit allein ausschlaggebend.

Diese Aufgabe wird gelöst durch die Merkmale des ersten Patentanspruchs. Weitere bevorzugte Ausführungsbeispiele werden in den Unteransprüchen beschrieben.

Erfindungsgemäss umfasst der eingangs beschriebene Visierkörper ein zylindrisches Gehäuse mit einer Achse und eine normal zu dieser angeordneten, transparenten Stirnwand als Betrachtungsfläche. Zudem umfasst er eine ihr entgegengesetzt angeordnete Rückwand und einen Mantel. Die Stirnwand, die Rückwand und der Mantel bilden gemeinsam einen gasdicht verschlossenen Innenraum.

In diesem Innenraum ist eine als selbstleuchtende Tritiumgaslichtquelle GTLS ausgestaltete, zylindrische Glaskapsel koaxial zur Achse eingebracht, welche eine Glasmantelfläche und eine der Stirnwand zugewandten Frontfläche umfasst. Die Glaskapsel wird hier auch GTLS genannt. Erfindungsgemäss ist zwischen der Glasmantelfläche der Glaskapsel und dem Mantel des Gehäuses eine Pigmentschicht angeordnet oder aufgebracht, die mit nachleuchtenden Pigmenten versetzt ist und eine der Stirnwand zugewandten Stirnfläche aufweist. Wichtig ist, dass zwischen der Frontfläche und der Stirnwand keine Schicht mit nachleuchtenden Pigmenten angeordnet ist, sodass ein Betrachter, der axial auf die Stirnwand schaut, freie Sicht durch die Stirnwand auf die Frontfläche der Glaskapsel und die Stirnfläche der Pigmentschicht hat.

Es hat sich herausgestellt, dass der äussere, radiale Rand des Leuchtpunktes, der durch das GTLS erzeugt wird, klarer definiert wird durch die abgrenzende Einfassung der nachleuchtenden Pigmente in der Pigmentschicht, da diese ein seitliches Ausleuchten verhindert. Allerdings ist es von Vorteil, wenn sich die Farben des GTLS und der Pigmente möglichst ähnlich sind, sodass der Punkt als optische Einheit wahrgenommen wird.

Erstaunlicherweise ist es dafür ausreichend, wenn diese Pigmentschicht nur sehr dünn ist, beispielsweise zwischen 0.1 und 0.3 mm, idealerweise etwa 0.2 mm. Als Pigmente werden bevorzugt Stoffe mit Strontiumaluminat (SrAl2O4), Zinksulfid (ZnS), LumiNova^{®} und/oder SuperLumiNova^{®} verwendet.

Weitere bevorzugte Ausgestaltungen sind in den abhängigen Patentansprüchen beschrieben.

### Kurze Beschreibung der Zeichnungen

Im Folgenden wird die Erfindung in verschiedenen Zeichnungen dargestellt und mit Hilfe der später erläuterten Bezugszeichen näher erklärt. Gleiche Ziffern bezeichnen stets dieselben Sachverhalte.

Es zeigen:
- Fig. 1: Einen erfindungsgemässer Visierkörper in einer einfachen, schematischen Ausführung;
- Fig. 2: einen Visierkörper mit einer Linse;
- Fig. 3a: einen Visierkörper mit einer Vergussmasse verschlossen;
- Fig. 3b: einen Visierkörper mit der Vergussmasse als Pigmentschicht;
- Fig. 4: einen Visierkörper mit angebrachter Rückwand;
- Fig. 5: einen Visierkörper mit inwendig beschichtetem Mantel;
- Fig. 6: einen Visierkörper mit einem transparenten Teilbereich im Mantel.

### Wege zur Ausführung der Erfindung

In der Folge beziehen sich die Begriffe «vorne» oder «vorderer Bereich» auf das Gebiet im Bereich der Stirnwand des Visierkörpers, auch «Stirnbereich» genannt, während sich der Begriff «hinten» oder «hinterer Bereich» auf das Gebiet bei der Rückwand des Visierkörpers bezieht.

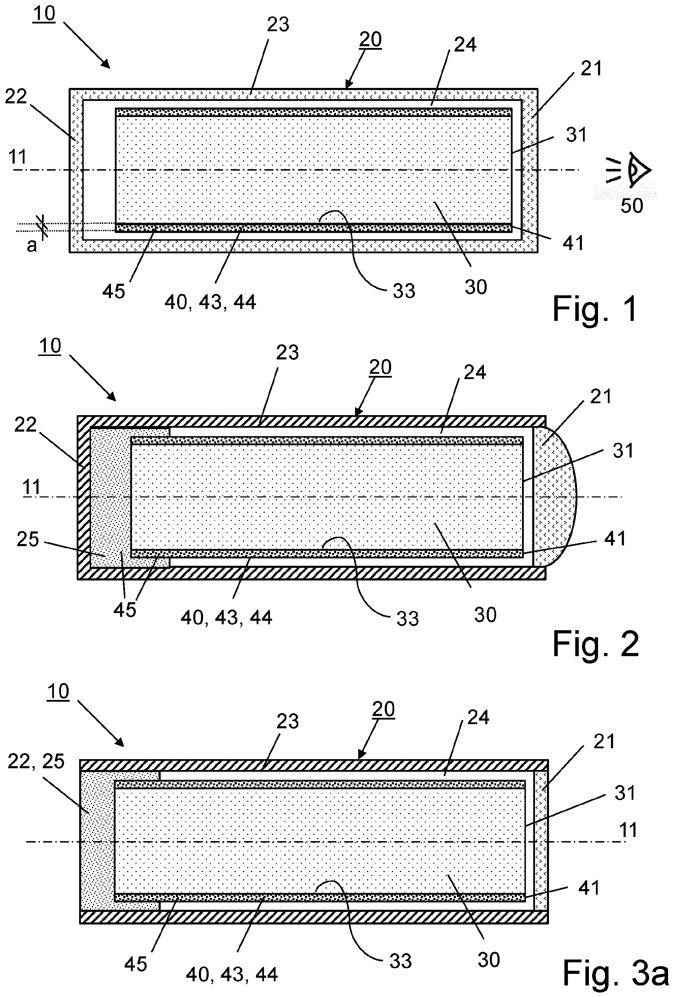

In Fig. 1 ist ein erfindungsgemässer, permanent selbstleuchtender Visierkörper 10 dargestellt, in einer einfachen Darstellung. Er wird zur Kennzeichnung wichtiger Punkte bei Helligkeit, schlechten Lichtverhältnissen sowie bei Dunkelheit verwendet. Insbesondere kann er zum Einbau in Instrumente zum Anvisieren verwendet werden.

Der Visierkörper 10 umfasst ein zylindrisches Gehäuse 20 mit einer Achse 11, eine normal zu dieser angeordneten, transparenten Stirnwand 21 als Betrachtungsfläche, eine ihr entgegengesetzt angeordnete Rückwand 22 und einen Mantel 23, welche gemeinsam einen gasdicht verschlossenen Innenraum 24 bilden. Im Innenraum 24 ist eine als selbstleuchtende Tritiumgaslichtquelle GTLS ausgestaltete, zylindrische Glaskapsel 30 koaxial zur Achse 11 eingebracht. Diese Glaskapsel 30 umfasst eine Glasmantelfläche 33 und eine der Stirnwand 21 zugewandten Frontfläche 31.

Zwischen der Glasmantelfläche 33 der Glaskapsel 30 und der dem Mantel 23 des Gehäuses 20 ist eine Pigmentschicht 40 angeordnet oder aufgebracht, die mit nachleuchtenden Pigmenten 45 versetzt ist. Sie weist eine der Stirnwand 21 zugewandten Stirnfläche 41 auf. Diese ist ringscheibenförmig und umrandet das GTLS in Richtung der Stirnwand.

Erfindungsgemäss ist zwischen der Frontfläche 31 und der Stirnwand 21 keine Schicht mit nachleuchtenden Pigmenten angeordnet, sodass ein Betrachter 50, der axial auf die Stirnwand 21 schaut, freie Sicht durch die Stirnwand 21 auf die Frontfläche 31 der Glaskapsel 30 und die Stirnfläche 41 der Pigmentschicht 40 hat.

Das Gehäuse 20 ist in dieser Darstellung einteilig aus einem einheitlichen Material dargestellt und transparent. Beim Bauen wird das Gehäuse 20 allerdings aus mehreren Komponenten bestehen. Bei Fig. 1 wird nicht näher darauf eingegangen. Generell kann der Mantel 23 mindestens teilweise aus Metall, Kunststoff, Glas, Saphirglas oder Keramik bestehen.

Ein Visierkörper 10 sollte mindestens von hinten nicht leuchten, damit der Benutzer nicht gesehen wird. Da ein Visierkörper 10 aber in der Regel in eine Vorrichtung eingebaut wird, bei der nur die Front und allenfalls ein oberer Bereich im Mantel 23 sichtbar sind, ist ein transparentes Gehäuse 20 kein Problem bei der Nutzung. Ebenso ist eine transparente und sichtbare Rückwand 22 bei Sportschützen unproblematisch.

Vorzugsweise sind die Farben der selbstleuchtenden Glaskapsel 30 und der nachleuchtenden Pigmente 45 ähnlich, zumindest sollten sie demselben Farbton angehören. Dadurch unterstützen sie sich gegenseitig im Erscheinungsbild und bilden eine optische Einheit für den Betrachter. Durch die ringscheibenförmige Einfassung des GTLS 30 mit der mit Pigmenten 45 versetzte Stirnfläche 41 wird der Rand des GTLS 30 akzentuiert, womit der so entstandene Leuchtpunkt an Schärfe gewinnt. Dies ist insofern wichtig, weil der Betrachter 50 seine Augen auf einen entfernten Zielpunkt fokussiert und nicht auf den durch das GTLS 30 erzeugten Leuchtpunkt. Der erzeugte Leuchtpunkt sollte daher möglichst klein aber gut sichtbar sein und nicht blenden.

Die Pigmentschicht 40 weist dazu eine radiale Breite a auf, die sehr dünn ist. Vorzugsweise ist sie zwischen 0.1 bis 0.3 mm, idealerweise 0.2 mm. Aber auch dünnere radiale Breiten bis zu 0.05 mm erzielen bereits einen positiven Effekt. Stärkere Breiten bis 1 mm sind ebenfalls erstrebenswert, doch aus Platzmangel sind solche oder höhere radiale Breiten kaum einbaubar. Ein GTLS ist in der Regel 4.5 mm lang bei einem Durchmesser von 1.25 mm. Das Gehäuse 20 ist entsprechend möglichst klein gebaut.

Als nachleuchtende Pigmente 45 werden vorzugsweise Fotolumineszenzen eingesetzt, welche Strontiumaluminat SrAl2O4, Zinksulfid ZnS, LumiNova^{®} und/oder SuperLumiNova^{®} umfassen. Auch andere Fotolunineszenzen sind geeignet, solange sie eine lange Nachleuchtzeit aufweisen. SuperLumiNova^{®} beispielsweise leuchtet während ca. 12 Stunden nach.

In Fig. 2 ist eine weitere Bauform eines Visierkörpers 10 dargestellt. Die Stirnwand 21 ist hier als separater Baukörper ausgestaltet, der in einem Stirnbereich des Mantels 23 eingesetzt oder aufgesetzt und darin resp. daran befestigt, vorzugsweise angeklebt ist. Auch Befestigung durch Einpressen oder Reibschweissen ist möglich. Der Mantel 23 des Gehäuses 20 ist in diesem Beispiel aus nicht transparentem Material. Dadurch, dass die Stirnwand 21 eingesetzt wird, können das GTLS 30 und die Pigmentschicht 40 ins offene Gehäuse 20 eingebracht werden, bevor der Innenraum 24 mit der Stirnwand 21 verschlossen wird.

Die Stirnwand 21 kann plan oder zu einer Linse 21 mit konvexer oder konkaver Oberfläche ausgestaltet sein, wobei gekrümmte Flächen innen und/oder aussen ausgestaltet sein können. In Fig. 2 ist die äussere Fläche der Linse 21 konvex dargestellt, andere Beispiele sind hier nicht abgebildet. Durch die Wirkung einer Linse 21 lässt sich der vom GTLS 30 erzeugte Leuchtpunkt bündeln und auf die gewünschte Distanz optimieren. Der Visierkörper kann für die Verwendung im Korn einer bestimmten Waffe optimiert werden, da der Abstand vom Korn bis zum Auge eines Betrachters 50 bekannt und konstant ist. Eine plane Stirnwand 21 ist auch möglich und wird vielfach bevorzugt.

Die Stirnwand 21 kann insbesondere aus Glas, Saphirglas oder Kunststoff hergestellt sein. Dasselbe gilt auch für die anderen Komponenten des Gehäuses 20, die Rückwand 22 und den Mantel 23. Andererseits können diese Komponenten auch aus nicht transparentem Material sein wie Metall, Keramik oder nicht transparentem Glas oder Kunststoff.

Um das GTLS 30 zu fixieren, kann im hinteren Bereich des Innenraums 24 eine Vergussmasse 25 eingesetzt werden, in welches das GTLS 30 eingepresst wird. Die Vergussmasse 25 verteilt sich dann um den hinteren Teil des GTLS 30. Die Vergussmasse 25 kann insbesondere auch Pigmente 45 enthalten und/oder mit Klebstoff versetzt sein. Als Vergussmasse 25 kann dasselbe Material verwendet werden wie das Material, aus dem die Pigmentschicht 40 besteht. Es ist sogar möglich, eine grössere Menge der Vergussmasse 25 aus dem Material der Pigmentschicht 40 in den Innenraum 24 zu geben, sodass nach dem Einpressen überschüssiges Material aus dem vorne offenen Gehäuse 20 quillt, das entfernt und die Frontfläche 31 von Pigmenten 45 gereinigt wird, bevor die Stirnwand 21 wie oben beschrieben am oder im Mantel 23 befestigt wird. Das GTLS 30 darf die Stirnwand 21 dabei berühren, muss aber nicht. In dieser Bauform muss keine weitere Pigmentschicht 45 angebracht werden, da die Vergussmasse 25 diese vollständig ersetzt.

In Fig. 3a ist eine weitere Variante dargestellt. Hier ist die Rückwand 22 aus der Vergussmasse 25 hergestellt, durch welche die Glaskapsel 30 gasdicht im Innenraum 24 fixiert und schockresistent gelagert ist. Es kann dieselbe Vergussmasse 25 verwendet werden, wie sie in Fig. 2 beschrieben wurde, oder eine andere, ohne Pigmente. Zur Herstellung eines solchen Visierkörpers 10 kann erst die Stirnwand 21 in den beidseitig offenen Mantel 23 eingesetzt und befestigt werden, bevor das GTLS 30 und die Pigmentschicht 40 in den Innenraum 24 gebracht werden. Anschliessend wird beispielsweise ein Tropfen dieser Vergussmasse 25 auf die hintere Öffnung des Mantels 23 gebracht, wo eine Rückwand 22 ausgebildet werden soll. Diese Vergussmasse 25 zieht durch die Kapillarwirkung etwas in den Spalt 29 zwischen den Mantel 23 und der Glasmantelfläche 33 oder wird darin eingefrückt, wodurch das GTLS 30 auch gut fixiert wird. Zudem füllt sie den Raum hinter dem GTLS 30 bis zum Ende des Mantels 23. Die Vergussmasse 25 sollte stabil sein gegen Umwelteinflüsse, sie kann ein Kleber sein. Falls sie mit Pigmenten 45 versetzt ist, zerfallen nur diese Pigmente 45, welche direkt der Umwelt ausgesetzt sind.

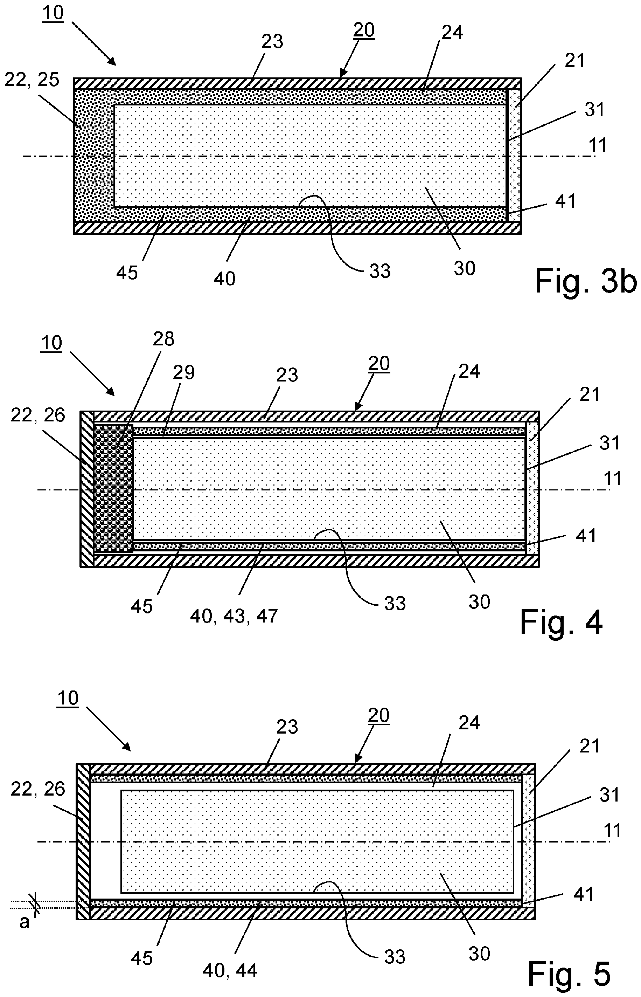

Alternativ dazu kann die Vergussmasse 25 in einen hinteren Bereich eines beidseits offenen Mantels 23 gebracht werden, in welchem das GTLS 30 und die Pigmentschicht 40 entweder bereits vorliegen oder von der anderen Seite her eingebracht werden. So kann die Luft im Innenraum 24 entweichen, bevor die Stirnwand 21 am Mantel 23 befestigt wird und den Innenraum 24 gasdicht verschliesst. Auch hier bildet die Vergussmasse 25 die Rückwand 22. Auch die Verwendung einer grösseren Menge der Vergussmasse 25 ist möglich, sodass diese die Pigmentschicht 40 ersetzt, wie in Fig. 2 beschrieben, wenn als Vergussmasse 25 das Material verwendet wird, aus dem die Pigmentschicht 40 besteht. In Fig. 3b ist eine solche Variante dargestellt.

In Fig. 4 ist wieder eine andere Variante des Visierkörper 10 dargestellt. Bei dieser ist die Rückwand 22 als Bauteil 26 an den Mantel 23 angebracht, vorzugsweise angeklebt oder durch Reibschweissen befestigt. Auch hier sind die Glaskapsel 30 und die Pigmentschicht gasdicht im Innenraum 24 verschlossen. Um eine Fixierung des GTLS 30 zu erreichen, kann zwischen das Bauteil 26 und die Glaskapsel 30 ein elastischer Stoff 28 eingebracht werden, welcher die Glaskapsel 30 mit seiner Frontfläche 31 an die Stirnwand 21 presst.

Die Pigmentschicht 40 kann insbesondere als Schlauch oder Hülse 43 ausgestaltet sein und um die Glaskapsel 30 gebracht wurde, bevor diese in den Innenraum 24 gebracht wird. Dadurch kann ein kleiner Spalt 29 zwischen dem GTLS 30 und der Pigmentschicht 40 entstehen, was unbedeutend ist. Der Schlauch oder die Hülse 43 können auch dicht an der Glasmantelfläche 33 anliegen. Sie können auch am Mantel des GTLS 30 befestigt werden, beispielsweise mit einem kleinen Klebepunkt. Eine Einklemmung zwischen der Stirnwand 21 und dem elastischen Stoff 28, wie in Fig. 4 gezeigt, ist auch möglich.

Alternativ dazu kann die Pigmentschicht 40, wie in Fig. 5 dargestellt, als Beschichtung 44 im Innenraum 24 inwendig am Mantel 23 aufgetragen werden oder, wie zum Beispiel in Fig. 1 bis 3a oder 6 dargestellt, aussen an der Glasmantelfläche 33.

In den Beispielen nach Fig. 4 und 5 reicht die Pigmentschicht 40 mit ihrer Stirnfläche 41 bis zur Stirnwand 21, wobei der Betrachter 50 aber nicht durch diese Pigmentschicht 40 hindurchschaut, um das GTLS 30 zu sehen, da die Stirnfläche 41 stets neben der Frontfläche 31 des GTLS ist. Zwischen der Stirnwand 21 und der Frontfläche 31 befinden sich niemals eine Pigmentschicht 40 und auch keine Pigmente 45.

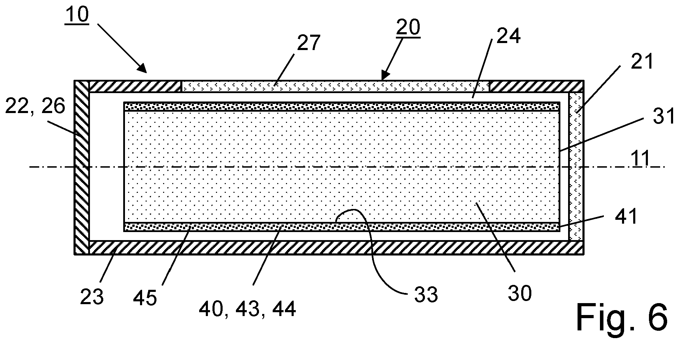

In Fig. 6 ist schliesslich eine Variante dargestellt, bei der der Visierkörper 10 im Mantel 23 des Gehäuses 20 einen transparenten Teilbereich 27 aufweist, um einen Lichteinfall zur Aktivierung der nachleuchtenden Pigmente 45 zu ermöglichen, wie das auch in der Ausführung nach Fig. 1 der Fall ist. Dazu kann beispielsweise der gesamte Mantel 23 aus transparentem Material wie Glas, Saphirglas oder Kunststoff hergestellt sein. Anschliessend kann ein Teil des Mantels 23 abgedeckt werden, falls Bedarf dafür besteht, beispielsweise durch Auftragen einer Farbschicht, insbesondere schwarz. Der Lichteinfall geschieht bei allen Varianten durch die transparente Stirnwand 21.

Die in den verschiedenen Figuren beschriebenen Merkmale können frei kombiniert werden, es werden hier nicht alle möglichen Kombinationen angegeben. So kann die Pigmentschicht 40 in den Figuren 1 bis 3a und 6 entweder als Schlauch oder Hülse 43 oder als Beschichtung 44 ausgestaltet sein. Stattdessen kann in diesen Ausführungen auch der Mantel 23 von innen mit einer Beschichtung 44 versehen sein. Die Vergussmasse 25 kann mit einer Linse 21 kombiniert werden und ein transparenter Teilbereich 27 im Mantel 23 lässt sich auch mit allen anderen Merkmalen kombinieren. Die Liste hier ist nicht abschliessend.

### Bezugszeichenliste

- 10: Visierkörper
- 11: Achse
- 20: Gehäuse
- 21: Stirnwand, Linse
- 22: Rückwand
- 23: Mantel
- 24: Innenraum
- 25: Vergussmasse
- 26: Bauteil (als Rückwand)
- 27: Transparenter Teilbereich
- 28: elastischer Körper
- 29: Spalt
- 30: Glaskapsel, GTLS
- 31: Frontfläche
- 33: Glasmantelfläche
- 40: Pigmentschicht
- 41: Stirnfläche
- 43: Schlauch oder Hülse
- 44: Beschichtung
- 45: Pigment
- 50: Betrachter, Auge eines Betrachters

- a: Breite

## Patentansprüche

1. Permanent selbstleuchtender Visierkörper (10) zur Kennzeichnung wichtiger Punkte bei Helligkeit, schlechten Lichtverhältnissen sowie bei Dunkelheit, insbesondere zum Einbau in Instrumente zum Anvisieren, umfassend ein zylindrisches Gehäuse (20) mit einer Achse 11, eine normal zu dieser angeordneten, transparenten Stirnwand (21) als Betrachtungsfläche, eine ihr entgegengesetzt angeordnete Rückwand (22) und einen Mantel (23), welche gemeinsam einen gasdicht verschlossenen Innenraum (24) bilden, wobei im Innenraum (24) eine als selbstleuchtende Tritiumgaslichtquelle (GTLS) ausgestaltete, zylindrische Glaskapsel (30) koaxial zur Achse (11) eingebracht ist, welche eine Glasmantelfläche (33) und eine der Stirnwand (21) zugewandten Frontfläche (31) umfasst,
**dadurch gekennzeichnet,**
**dass** zwischen der Glasmantelfläche (33) der Glaskapsel (30) und der dem Mantel (23) eine Pigmentschicht (40) angeordnet oder aufgebracht ist, die mit nachleuchtenden Pigmenten (45) versetzt ist und eine der Stirnwand (21) zugewandten Stirnfläche (41) aufweist, und wobei zwischen der Frontfläche (31) und der Stirnwand (21) keine Schicht mit nachleuchtenden Pigmenten angeordnet ist, sodass ein Betrachter, der axial auf die Stirnwand (21) schaut, freie Sicht durch die Stirnwand (21) auf die Frontfläche (31) der Glaskapsel (30) und die Stirnfläche (41) der Pigmentschicht (40) hat.

2. Visierkörper nach Anspruch 1, **dadurch gekennzeichnet, dass** die Farben der selbstleuchtenden GTLS (30) und der nachleuchtenden Pigmente (45) ähnlich sind und demselben Farbton angehören, um sich im Erscheinungsbild gegenseitig zu unterstützen und möglichst eine optische Einheit zu bilden.

3. Visierkörper nach Anspruch 1 oder 2, **dadurch gekennzeichnet, dass** die nachleuchtenden Pigmente (45) Fotolumineszenzen sind, vorzugsweise umfassend Strontiumaluminat (SrAl2O4), Zinksulfid (ZnS), LumiNova^{®} und/oder SuperLumiNova^{®}.

4. Visierkörper nach einem der vorhergehenden Ansprüche, **dadurch gekennzeichnet, dass** die Stirnwand (21) in oder an einem Stirnbereich des Mantels (23) angebracht und an dieser befestigt, vorzugsweise eingepresst, angeschweisst oder angeklebt ist.

5. Visierkörper nach einem der vorhergehenden Ansprüche, **dadurch gekennzeichnet, dass** die Stirnwand (21) plan oder zu einer Linse mit konvexer oder konkaver Oberfläche ausgestaltet ist.

6. Visierkörper nach einem der vorhergehenden Ansprüche, **dadurch gekennzeichnet, dass** die Stirnwand (21) aus Glas, Saphirglas oder Kunststoff hergestellt ist.

7. Visierkörper nach einem der vorhergehenden Ansprüche, **dadurch gekennzeichnet, dass** die Rückwand (22) aus einer Vergussmasse (25) hergestellt ist, durch welche die Glaskapsel (30) gasdicht und schockresistent im Innenraum (24) fixiert ist.

8. Visierkörper nach einem der Ansprüche 1 bis 7, **dadurch gekennzeichnet, dass** die Rückwand (22) als Bauteil (26) an den Mantel (23) angebracht, vorzugsweise angeklebt ist, wodurch die Glaskapsel (30) gasdicht im Innenraum (24) verschlossen ist.

9. Visierkörper nach einem der vorhergehenden Ansprüche, **dadurch gekennzeichnet, dass** die Pigmentschicht (40) als Schlauch oder Hülse (43) ausgestaltet ist und eng oder mit geringem Spalt (29) um die Glaskapsel (30) anliegt.

10. Visierkörper nach einem der vorhergehenden Ansprüche, **dadurch gekennzeichnet, dass** die Pigmentschicht (40) als Beschichtung (44) im Innenraum (24) inwendig am Mantel (23) oder aussen an der Glasmantelfläche (33) aufgetragen ist.

11. Visierkörper nach einem der vorhergehenden Ansprüche, **dadurch gekennzeichnet, dass** die Pigmentschicht (40) eine radiale Breite (a) von 0.1 bis 0.3 mm, vorzugsweise 0.2 mm aufweist.

12. Visierkörper nach einem der vorhergehenden Ansprüche, **dadurch gekennzeichnet, dass** der Mantel (23) einen transparenten Teilbereich (27) aufweist, um einen Lichteinfall zur Aktivierung der nachleuchtenden Pigmente (45) zu ermöglichen.

13. Visierkörper nach einem der vorhergehenden Ansprüche, **dadurch gekennzeichnet, dass** der Mantel (23) mindestens teilweise aus Metall, Kunststoff, Glas, Saphirglas oder Keramik besteht.
